# EUROPÄISCHE PATENTSCHRIFT

(11) **EP 0 761 602 B1**
(45) Veröffentlichungstag und Bekanntmachung des Hinweises auf die Patenterteilung: **17.05.2000**
(21) Anmeldenummer: 96113526.6
(22) Anmeldetag: 23.08.1996
(51) Int. Cl.: C02F 1/42, B01J 49/00

(54) **Anlage zur Wasserbehandlung**
Installation for water treatment
Installation pour le traitement d'eau

(30) Priorität: 31.08.1995 DE 19532074
(43) Veröffentlichungstag der Anmeldung: 12.03.1997
(73) Patentinhaber: Karl Spiegl GbmH & Co., 71106 Magstadt/Württ. (DE)
(72) Erfinder: Spiegl, Peter, 71134 Aidlingen/Württ. (DE)
(74) Vertreter: Dreiss, Fuhlendorf, Steimle & Becker, Patentanwälte

(56) Entgegenhaltungen:
- DE-A- 3 528 617
- DE-A- 3 625 337
- FR-A- 1 093 901
- FR-A- 2 448 746
- PATENT ABSTRACTS OF JAPAN vol. 4, no. 172 (P-038) & JP 55 118109 A (EBARA)
- "Brockhaus Enzyklopädie", 19. Aufl., F.A. Brockhaus, Mannheim 1987, Bd. 3, Seiten 166-7 & 272-3

## Beschreibung

Die Erfindung betrifft eine Anlage zum Behandeln, insbesondere Enthärten, von Wasser, gemäß dem Oberbegriff des Anspruchs 1.

Bei einer entsprechenden Wasserenthärtungsanlage gemäß Fig. 3 der DE-A-36 25 337 ist in die Nebenströmungsleitung ein 3/2-Wegeventil geschaltet, das einen zum Regenerieren des ionenaustauschenden Mediums der Meßzelle wählbaren Schaltzustand und eine die beiden Anschlußstellen der unterbrochenen Nebenströmungsleitung verbindende Schaltstellung ermöglicht, die im Folgenden vorausgesetzt wird.

Ein Problem bei der bekannten Anlage ist, daß die Durchströmung der Meßzelle zwecks Feststellung des momentanen Härtegrades oder Zellenregeneration nicht in jedem Betriebszustand ausreicht, um ein hinreichend sicheres Meß-bzw. Regenerierungsergebnis zu erhalten. Als Ursache für eine ungenügende Durchströmung ist erkannt worden, daß unter einem bestimmten Druckabfall längs der Hauptströmungsleitung der Druckgradient an der Meßzelle zu gering ist.

Aus "Brockhaus Enzyklopädie", 19. Aufl., F.A. Brockhaus, Mannheim 1987, Bd. 3, Seiten 166-167 ("Bernoulli-Gleichung") und Seiten 272-273 ("Biber") ist die Erhöhung des Drucks in einer abgezweigten Nebenströmung durch Aufstauen der Hauptströmung bekannt. Aus Patent Abstracts of Japan, vol. 4, no. 172 (P-038) & JP-A-55 118 109 ist ein Verfahren zur Einstellung eines konstanten Volumenstromverhältnisses zwischen zwei fließenden Flüssigkeiten mittels eines Doppelkammer-Drosselorganes bekannt.

Der Erfindung liegt daher die Aufgabe zugrunde, die Durchströmung der Meßzelle weitgehend unabhängig von derjenigen des ionenaustauschenden Mediums zu sichern, insbesondere bei niedrigem Druckgefälle eine sichere Durchströmung zu gewährleisten.

Diese Aufgabe wird erfindungsgemäß mit einer Anlage gelöst, die die Merkmale des Anspruchs 1 aufweist.

Das die Hauptströmung durchflußunabhängig drosselnde Organ bewirkt eine relative Erniedrigung des Nebenströmungswiderstandes, die zur ausreichenden Durchströmung der Meßzelle führt.

Eine bevorzugte Ausführung der erfindungsgemäßen Anlage ist in den Ansprüchen 2 bis 4 gekennzeichnet.

Im Folgenden ist die Erfindung anhand der durch die Zeichnung beispielhaft dargestellten bevorzugten Ausführungsform einer erfindungsgemäßen Wasserenthärtungs-Anlage im Einzelnen erläutert.

Es zeigen:

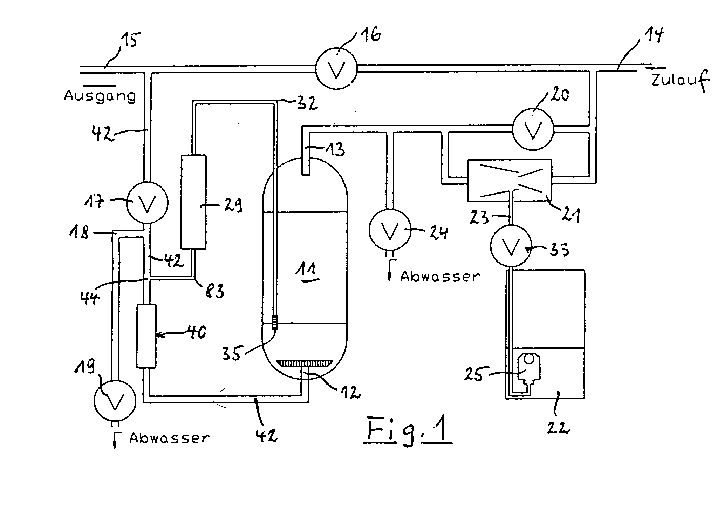

- Fig. 1: ein Schaltbild der ganzen Anlage; und
- Fig. 2 a - c: drei schematische Längsschnitte eines Drosselorgans der Anlage in drei inneren Zuständen:
(a) außer Betrieb
(b) Enthärtungs-lRegenerierbetrieb
(c) Rückspülbetrieb

Das Ausführungsbeispiel der erfindungsgemäßen Anlage entspricht der Anlage gemäß Fig. 3 der DE-A-36 25 337 bis auf deren 3/2-Wegeventil und dessen Zuleitung für Sole, die hier fehlen, wo ein Drosselorgan 40 eine Wasserleitung 42 unterbricht, die das dadurch zum Teil ersetzte Entnahmerohr 12 mit der Weichwasser-Abführleitung 15 verbindet, wobei die Prüfwasserleitung 83 zwischen Drosselorgan 40 und Sperrventil 17 an der Stelle 44 einmündet. - Aufbau und Wirkungsweise der bekannten Anlage sind von Zeile 59 der Spalte 11 bis Zeile 58 der Spalte 13 der DE-A-36 25 337 beschrieben. Mit den folgenden Bezugszahlen sind die folgenden Bauteile bezeichnet:
- 14: Zuführleitung
- 18: Abflussleitung
- 21: Sole-Injektor
- 22: Sole-Tank
- 23: Einlassleitung
- 25: Luft-Rückschlagventil
- 35: Tauchfilter

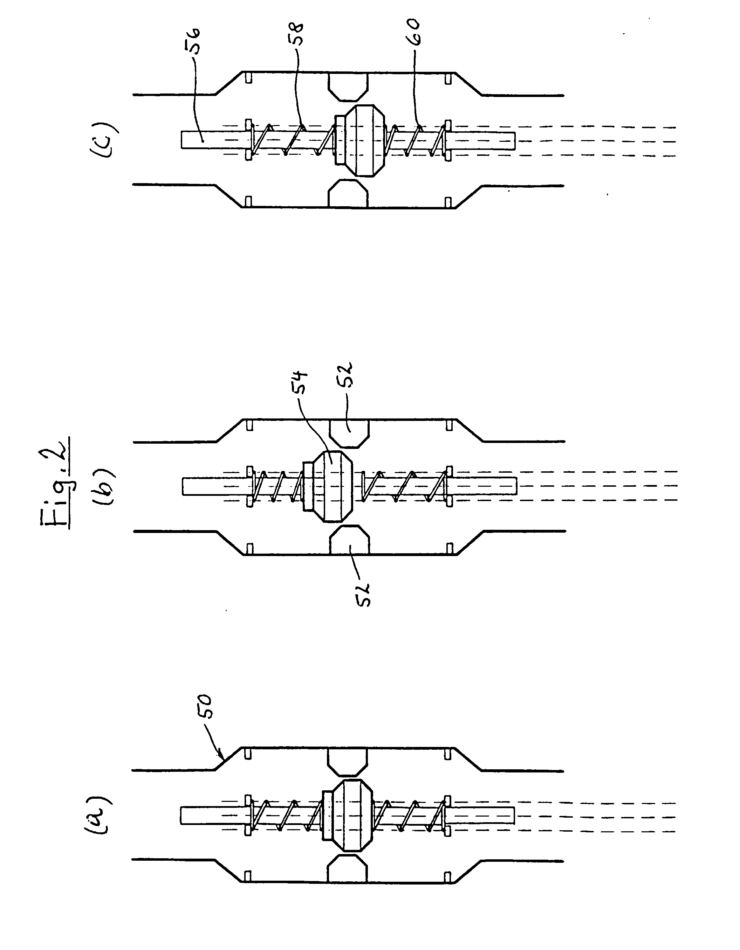

Das Drosselorgan ist ein Drosselventil 40 (siehe Fig. 2) und besitzt ein den Querschnitt der Leitung 42 erweiterndes zylindrisches Gehäuse 50, in dessen axialer Mitte ein ringförmiger Ventilsitz 52 und ein zum Absperren paßgenau durch diesen axial bewegbarer, kolbenähnlicher Ventilkörper 54 angeordnet sind, der in der Haupt- oder deren Gegenströmung liegt, falls er in der einen bzw. anderen Strömungsrichtung vom Ventilsitz 52 axial entfernt ist, und welcher sich mittels zweier auf einer axialen Kolbenführungsstange 56 sitzender Schraubenfedern 58 und 60 im Sitz 52 im statischen Gleichgewicht befindet, falls keine Strömung durch das Drosselventil stattfindet.

Beim Enthärten ebenso wie beim Regenerieren mittels Sole und beim Auswaschen derselben wechselt das Drosselventil 40 seinen Zustand von a nach b, dagegen von a nach c beim Rückspülen, wenn die Ventile 16, 17 und 24 geöffnet, die übrigen Ventile 19, 20 und 33 aber geschlossen sind. - Das Drosselventil 40 ist also stets wirksam, wenn eine Durchströmung stattfindet, gleich in welcher der beiden möglichen Richtungen.

## Patentansprüche

1. Anlage zum Behandeln, insbesondere Enthärten, von Wasser durch Ionenaustausch in einem regenerierbaren Medium, mit einem Ionentauscher (11), einer Zuführleitung (13) für zu behandelndes Wasser, einer Hauptströmungsleitung (42) für die Hauptströmung und einer Verbindungsleitung (32) für eine Nebenströmung, wobei die Hauptströmungsleitung (42) und die Verbindungsleitung (32) parallel zueinander verlaufen und aus dem Ionentauscher (11) ausmünden und an einer Stelle (44) zusammengeführt sind, wobei in der Verbindungsleitung (32) eine Messzelle (29) angeordnet ist, dadurch gekennzeichnet, dass in der Hauptströmungsleitung (42) ein Drosselorgan (40) angeordnet ist, welches im Wesentlichen durchflussunabhängig den Strömungswiderstand in der Hauptströmungsleitung (42) erhöht und dadurch den Druckabfall in der Messzelle (29) erhöht, indem das Drosselorgan (40) sowohl bei einem geringen Volumenstrom als auch bei einem hohen Volumenstrom durch die Hauptströmungsleitung (42) einen Durchflusswiderstand aufbaut, und das Drosselorgan (40) einen ringförmigen Ventilsitz (52) aufweist, dass im Ventilsitz (52) ein passgenau durch diesen bewegbarer Ventilkörper (54) angeordnet ist, dass der Ventilkörper (54) in der Hauptströmung oder in der Gegenströmung liegt, falls er in der einen bzw. in der anderen Strömungsrichtung vom Ventilsitz (52) entfernt wird, dass zwischen Ventilsitz (52) und Ventilkörper (54) ein Ventilspalt sich befindet und dass über die Strömung durch das Drosselorgan (40) der Ventilkörper (54) aus dem Ventilsitz (52) unter Vergrößerung des Ventilspaltes entgegen einer Feder (58, 60) und/oder eines Gewichtes herausbewegbar ist.

2. Anlage nach Anspruch 1, dadurch gekennzeichnet, dass der Durchflusswiderstand im Drosselorgan (40) abhängig vom Volumenstrom selbsttätig verstellbar ist.

3. Anlage nach Anspruch 1 oder 2, dadurch gekennzeichnet, dass bei statischem Gleichgewicht, wenn keine Strömung stattfindet, sich der Ventilkörper (54) mit Ventilspalt im Ventilsitz (52) befindet.

4. Anlage nach Anspruch 1, 2 oder 3, dadurch gekennzeichnet, dass das Drosselorgan (40) vertikal durchströmbar ist und auf dem Ventilkörper (54) ein Gewicht sitzt, während an der Unterseite des Ventilkörpers (54) eine vertikal wirkende Schraubenfeder (60) angreift.

## Claims

1. A system for treatment of, in particular for the softening of water, by exchange of ions in a regenerable medium, comprising an ion-exchanger (11), a feed line (13) for water to be treated, a main flow line (42) for the main flow and a bypass flow line (32) for a bypass flow, the main flow line (42) and the bypass flow line (32) are arranged in parallel to each other and discharge from the ion-exchanger (11) and are connected to each other at a point (44), wherein in the bypass flow line (32) a measuring cell (29) is arranged, characterized in that the main flow line (42) including a throttling valve (40) which increases the resistance to flow in the main flow line (42) in particular independent from the existing flow and thereby increasing the pressure gradient across the measuring cell (29), wherein the throttling valve (40) is building up a resistance to flow at a small flow by volume as well as of a large flow by volume through the main flow line (42), and the throttling valve (40) including a ringlike valve seat (52), wherein a movable valve body (54) which fits through the valve seat (52) is arranged in the valve seat (52), that the valve body (54) is located in the main flow or in the counter flow, dependent on the direction of displacement from the valve seat (52) in the one or in the other flow direction, that a valve clearance exists between the valve seat (52) and the valve body (54) and that the valve body (54) being movable in response to the flow through the throttling valve (40) from the valve seat (52) against the force of a spring (58, 60) and/or a weight by enlargement of the valve clearance.

2. A system according to claim 1, wherein the resistance to flow in the throttling valve (40) is adjustable automatically depending on the flow by volume.

3. A system according to claim 1 or 2, wherein the valve body (54) is located in the valve seat (52) with the valve clearance during static equilibrium, when no flow occurs.

4. A system according to claim 1, 2 or 3, wherein the throttling valve (40) is oriented vertically and a weight is located on top of the valve body (54), while a spring acts in vertical direction on the underside of the valve body (54).

## Revendications

1. Installation pour le traitement, en particulier l'adoucissement, d'eau par échange d'ions dans un milieu apte à être régénéré, avec un échangeur d'ions (11), un conduit d'alimentation (13) de l'eau à traiter, un conduit d'écoulement principal (42) pour le flux principal et un conduit de raccordement (32) pour un flux dérivé, le conduit d'écoulement principal (42) et le conduit de raccordement (32) s'étendant parallèlement entre eux depuis l'échangeur d'ions (11) pour converger en un point (44), une cellule de mesure (29) étant agencée dans le conduit de raccordement (32), caractérisée en ce que le conduit d'écoulement principal (42) contient un dispositif d'étranglement (40) qui augmente la résistance à l'écoulement dans le conduit d'écoulement principal (42), et ce sensiblement indépendamment du débit, augmentant par là même la perte de charge dans la cellule de mesure (29), du fait que le dispositif d'étranglement (40) crée une résistance à la circulation à travers le conduit d'écoulement principal (42) pour un débit volumique faible comme pour un débit volumique élevé, en ce que le dispositif d'étranglement (40) possède un siège de soupape annulaire (52), en ce qu'un corps de soupape mobile (54) est agencé en ajustement serré dans ledit siège (52), en ce que le corps de soupape (54) se trouve dans le flux principal ou dans le contre-courant, lorsqu'il est éloigné du siège de soupape (52) dans un sens d'écoulement ou dans l'autre, en ce qu'un orifice de passage est défini entre le siège de soupape (52) et le corps de soupape (54) et en ce que le corps de soupape (54) peut, à l'encontre d'un ressort (58, 60) et/ou d'un poids, être délogé du siège de soupape (52) par le flux traversant le dispositif d'étranglement (40), augmentant ainsi l'orifice de passage.

2. Installation selon la revendication 1, caractérisée en ce que la résistance à la circulation dans le dispositif d'étranglement (40) peut se régler automatiquement en fonction du débit volumique.

3. Installation selon la revendication 1 ou 2, caractérisée en ce qu'en cas d'équilibre statique, en l'absence d'écoulement, le corps de soupape (54) se trouve avec l'orifice de passage dans le siège de soupape (52).

4. Installation selon la revendication 1, 2 ou 3, caractérisée en ce que le dispositif d'étranglement (40) peut être traversé verticalement et en ce qu'un poids repose sur le corps de soupape (54) tandis qu'un ressort à boudin (60) à action verticale prend appui sur la face inférieure du corps de soupape (54).
